(19) Europäisches Patentamt
European Patent Office
Office européen des brevets

(11) **EP 4 450 301 B1**

(12) **EUROPEAN PATENT SPECIFICATION**

(45) Date of publication and mention
of the grant of the patent:
**15.10.2025 Bulletin 2025/42**

(21) Application number: **24164749.4**

(22) Date of filing: **20.03.2024**

(51) International Patent Classification (IPC):
*B60C 11/00* (2006.01)      *B60C 11/03* (2006.01)

(52) Cooperative Patent Classification (CPC):
**B60C 11/005;** B60C 2011/0025; B60C 2011/0033;
B60C 2011/0341; B60C 2011/0353;
B60C 2011/0355; B60C 2011/036; B60C 2200/04

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.04.2023 JP 2023069912**

(43) Date of publication of application:
**23.10.2024 Bulletin 2024/43**

(73) Proprietor: **Sumitomo Rubber Industries, Ltd.
Kobe-shi, Hyogo-ken 651-0072 (JP)**

(72) Inventor: **UNO, Hiroki
Kobe-shi 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 508 353      EP-A1- 4 019 279
WO-A1-2018/117009**

**Description**

BACKGROUND OF THE INVENTION

Field of the Invention

The present invention relates to a tire. Specifically, the present invention relates to a tire that is mounted to a passenger car.

Background Art

From the viewpoint of consideration for the environment, reduction of rolling resistance is required for tires that are mounted to vehicles. Therefore, studies have been made by, for example, decreasing the number of components included in a tire, decreasing the thicknesses of the components, using low heat generation materials as the materials forming the components, etc. (for example, Japanese Laid-Open Patent Publication No. 2021-120242). Other tires are described in EP 3 508 353 A1, EP 3 508 353 A1 and EP 4 019 279 A1.

An object of the present invention is to provide a tire that can achieve reduction of rolling resistance while suppressing influence on grip performance.

SUMMARY OF THE INVENTION

A tire according to the present invention includes a tread configured to come into contact with a road surface, and a belt located radially inward of the tread. The tread includes a cap layer, an intermediate layer having a loss tangent at 30°C lower than a loss tangent at 30°C of the cap layer, and a base layer having a loss tangent at 30°C lower than the loss tangent at 30°C of the intermediate layer. The loss tangent is measured using a viscoelasticity spectrometer according to the standards of JIS K6394 at the following measurement conditions: initial strain = 10%, dynamic distortion = $\pm 1\%$, frequency = 10 Hz, mode = "stretch mode". The cap layer is located radially outward of the intermediate layer, and the base layer is located radially inward of the intermediate layer. Each end of the cap layer is located axially inward of an end of the intermediate layer, and each end of the base layer is located axially inward of the end of the intermediate layer. The belt includes an inner layer and an outer layer located radially outward of the inner layer. Each end of the outer layer is located axially inward of an end of the inner layer. A plurality of circumferential main grooves are formed on the tread so as to continuously extend in a circumferential direction, and at least three land portions are formed in the tread so as to be aligned in an axial direction. The at least three land portions include a shoulder land portion which is a land portion located on each outermost side in the axial direction. The plurality of circumferential main grooves include a shoulder circumferential main groove which is a circumferential main groove closest to the shoulder land portion. A circumferential narrow groove is formed on the shoulder land portion so as to continuously extend in the circumferential direction. A groove width of the circumferential narrow groove is smaller than a groove width of the shoulder circumferential main groove. The circumferential narrow groove is located between the shoulder circumferential main groove and the end of the outer layer in the axial direction. The circumferential narrow groove is tapered from a groove opening toward a groove bottom. A ratio of a groove width at the groove opening of the circumferential narrow groove to a width of the tread is not less than 2.5% and not greater than 3.5%.

According to the present invention, a tire that can achieve reduction of rolling resistance while suppressing influence on grip performance, is obtained.

BRIEF DESCRIPTION OF THE DRAWINGS

FIG. 1 is a cross-sectional view showing a part of a tire according to one embodiment of the present invention;
FIG. 2 illustrates grooves provided on a tread;
FIG. 3 is a cross-sectional view showing a shoulder land portion;
FIG. 4 is a cross-sectional view showing a circumferential narrow groove; and
FIG. 5 is a cross-sectional view showing a part of a tread portion.

DETAILED DESCRIPTION

Hereinafter, the present invention will be described in detail based on preferred embodiments with appropriate reference to the drawings.

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where the tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to 230 kPa, and no load is applied to the tire is referred to as standard state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a loss tangent (tan $\delta$) of a component formed from a crosslinked rubber, of the components included in the tire, is measured using a viscoelasticity spectrometer according to the standards of JIS K6394. The measurement conditions are as follows.

$$\text{Initial strain} = 10\%$$

$$\text{Dynamic distortion} = \pm 1\%$$

$$\text{Frequency} = 10 \text{ Hz}$$

$$\text{Mode} = \text{stretch mode}$$

$$\text{Temperature} = 30°C$$

In this measurement, a test piece (40 mm long $\times$ 4 mm wide $\times$ 1 mm thick) is sampled from the tire. The length direction of the test piece is caused to coincide with the circumferential direction of the tire. When a test piece cannot be sampled from the tire, a test piece is sampled from a sheet-shaped crosslinked rubber (hereinafter, also referred to as rubber sheet) obtained by pressurizing and heating a rubber composition, which is used for forming the component to be measured, at a temperature of 170°C for 12 minutes.

In the present invention, the loss tangent is represented as a loss tangent at 30°C.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

[Findings on Which Present Invention Is Based]

A tread includes a cap portion and a base portion. The cap portion comes into contact with a road surface. Normally, for the cap portion, importance is placed on grip performance rather than on low heat generation properties. The base portion is located radially inward of the cap portion. Contact with a road surface is not taken into consideration for the base portion. For the base portion, a crosslinked rubber that has low heat generation properties is used.

If a crosslinked rubber for which low heat generation properties are taken into consideration is used for the cap portion, the rolling resistance of a tire can be reduced. However, grip performance is decreased. Therefore, it is considered to form a surface layer of the cap portion from a crosslinked rubber for which importance is placed on grip performance, and provide an intermediate layer formed from a crosslinked rubber for which low heat generation properties are taken into consideration, on the inner side of the surface layer, that is, to form the tread with three layers.

Meanwhile, at the tread of a tire, a ground-contact state and a non-ground-contact state are repeated. The tread surface is curved so as to bulge outward at a crown portion. In the tread that is in a non-ground-contact state, the land surface of each shoulder land portion is located radially inward of the land surface of a crown land portion. When the tread comes into contact with a road surface, the tread is pressed against the road surface. This causes the tread to deform. The crown land portion moves radially inward, and the ground-contact surface expands axially outward from the equator. Then, each shoulder land portion comes into contact with the ground. In a ground-contact state, the tread becomes deformed such that the tread surface warps in the opposite direction.

In order to further reduce rolling resistance, the present inventor has conducted a study focusing on formation of a tread with three layers as well as strain generated in the tread. In this study, the present inventor has found that strain is generated more frequently near the surface of each shoulder land portion, that the generation of the strain can be suppressed by forming a narrow groove on the shoulder land portion, and that the cross-sectional shape of the narrow groove is deeply related to the reduction allowances of strain and heat generation in the tread formed with three layers, and thus has completed the invention described below.

[Outline of Embodiments of Present Invention]

[Configuration 1]

A tire according to one aspect of the present invention includes a tread configured to come into contact with a road surface, and a belt located radially inward of the tread, wherein: the tread includes a cap layer, an intermediate layer having a loss tangent at 30°C lower than a loss tangent at 30°C of the cap layer, and a base layer having a loss tangent at 30°C lower than the loss tangent at 30°C of the intermediate layer; the cap layer is located radially outward of the intermediate layer; the base layer is located radially inward of the intermediate layer; each end of the cap layer is located axially inward of an end of the intermediate layer; each end of the base layer is located axially inward of the end of the intermediate layer; the belt includes an inner layer and an outer layer located radially outward of the inner layer; each end of the outer layer is located axially inward of an end of the inner layer; a plurality of circumferential main grooves are formed on the tread so as to continuously extend in a circumferential direction, and at least three land portions are formed in the tread so as to be aligned in an axial direction; the at least three land portions include a shoulder land portion which is a land portion located on each outermost side in the axial direction; the plurality of circumferential main grooves include a shoulder circumferential main groove which is a circumferential main groove closest to the shoulder land portion; a circumferential narrow groove is formed on the shoulder land portion so as to continuously extend in the circumferential direction; a groove width of the circumferential narrow groove is smaller than a groove width of the shoulder circumferential main groove; the circumferential narrow groove is located between the shoulder circumferential main groove and the end of the outer layer in the axial direction; and the circumferential narrow groove is tapered from a groove opening toward a groove bottom.

By forming the tire as described above, the tire can achieve reduction of rolling resistance while suppressing influence on grip performance.

[Configuration 2]

Preferably, in the tire according to [Configuration 1] described above, a ratio of a groove width at the groove opening of the circumferential narrow groove to a width of the tread is not less than 2.5% and not greater than 3.5%.

[Configuration 3]

Preferably, in the tire according to [Configuration 1] or [Configuration 2] described above, a difference between the ratio of the groove width at the groove opening of the circumferential narrow groove to the width of the tread and a ratio of a groove width at a half position of a groove depth of the circumferential narrow groove to the width of the tread is not less than 0.5% and not greater than 1.5%.

[Configuration 4]

Preferably, in the tire according to any one of [Configuration 1] to [Configuration 3] described above, a ratio of the groove depth of the circumferential narrow groove to a thickness of the tread is not less than 60% and not greater than 95%.

[Configuration 5]

Preferably, in the tire according to any one of [Configuration 1] to [Configuration 4] described above, a ratio of a distance in the axial direction from the shoulder circumferential main groove to the circumferential narrow groove to a distance in the axial direction from the shoulder circumferential main groove to the end of the outer layer is not less than 15% and not greater than 55%.

[Details of Embodiments of Present Invention]

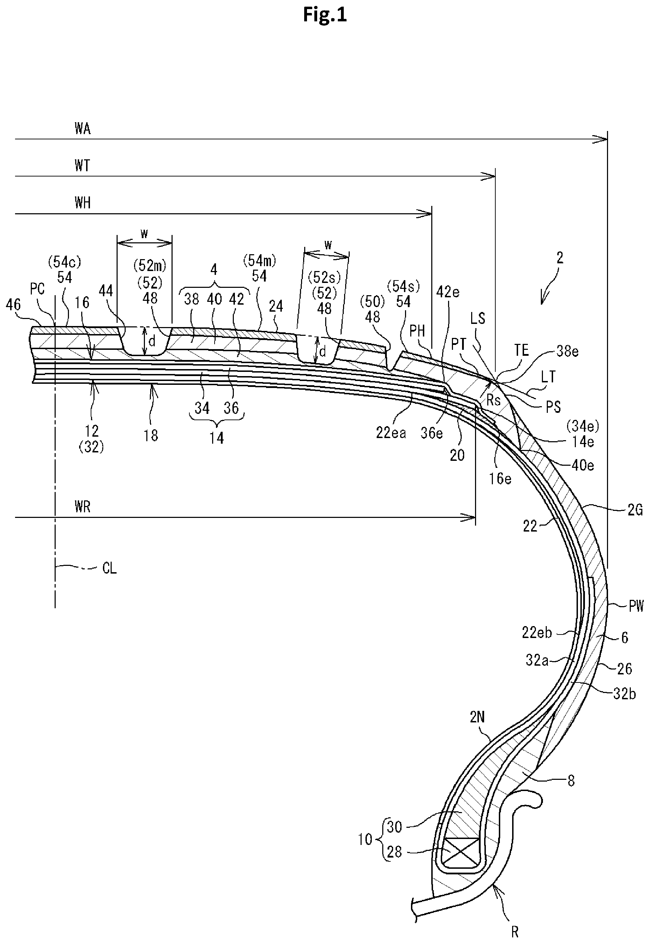

FIG. 1 shows a part of a tire 2 according to one embodiment of the present invention. The tire 2 is a pneumatic tire for a passenger car.

FIG. 1 shows a part of a cross-section (hereinafter, referred to as meridian cross-section) of the tire 2 taken along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R. The rim R is a standardized rim.

In FIG. 1, a position indicated by reference character PC is the point of intersection of an outer surface 2G of the tire 2 and the equator plane CL. The point of intersection PC is also referred to as the equator of the tire 2. In the case where a groove is located on the equator plane CL, the equator PC is specified on the basis of a virtual outer surface obtained on the assumption that no groove is provided thereon. The equator PC is also the radially outer end of the tire 2.

In FIG. 1, a position indicated by reference character PW is an axially outer end of the tire 2. In the case where decorations such as patterns and letters are present on the outer surface 2G, the outer end PW is specified on the basis of a virtual outer surface obtained on the assumption that the decorations are not present.

In FIG. 1, a length indicated by a double-headed arrow WA is the cross-sectional width (see JATMA or the like) of the tire 2. The cross-sectional width WA is the distance in the axial direction from a first outer end PW to a second outer end PW. The cross-sectional width WA is the maximum width of the tire 2, and each outer end PW is a position (hereinafter, referred to as maximum width position) at which the tire 2 has the maximum width WA. The cross-sectional width WA is specified in the tire 2 in the standardized state.

The tire 2 includes a tread 4, a pair of sidewalls 6, a pair of clinches 8, a pair of beads 10, a carcass 12, a belt 14, a band 16, an inner liner 18, a pair of cushions 20, and a pair of insulations 22 as components thereof.

The tread 4 is located radially outward of the carcass 12. The tread 4 has a tread surface 24 which comes into contact with a road surface. The tread surface 24 has a radially outwardly convex shape.

In the outer surface 2G of the tire 2, a side surface 26 is connected to the tread surface 24. The outer surface 2G of the tire 2 includes the tread surface 24 and a pair of side surfaces 26.

In the meridian cross-section, the contour of the tread surface 24 includes a plurality of arcs aligned in the axial direction. Among the plurality of arcs, an arc located on the outer side in the axial direction is a shoulder arc and has a smallest radius Rs. The contour line of the side surface 26 is connected to the shoulder arc.

A position indicated by reference character PT is the boundary between the shoulder arc and an arc located adjacent to the shoulder arc. A straight line LT is a tangent line that is tangent to the shoulder arc at the boundary PT.

A position indicated by reference character PS is the boundary between the shoulder arc and the contour line of the side surface 26. A straight line LS is a tangent line that is tangent to the shoulder arc at the boundary PS.

Reference character TE is the point of intersection of the tangent line LT and the tangent line LS. In the present invention, the point of intersection TE is a reference end of the tread 4. A length indicated by a double-headed arrow WT is the distance in the axial direction from a first reference end TE to a second reference end TE. In the present invention, the distance WT in the axial direction is the width of the tread 4. The width WT of the tread 4 is specified in the tire 2 in the standardized state.

In the tire 2, the ratio (WT/WA) of the width WT of the tread 4 to the cross-sectional width WA of the tire 2 is not less than 75% and not greater than 90%.

A position indicated by reference character PH is a position on the tread surface 24. The position PH corresponds to an axially outer end of a reference ground-contact surface described later.

A ground-contact surface for specifying the position PH is obtained, for example, using a ground-contact surface shape measuring device (not shown). The ground-contact surface is obtained when the tire 2 is brought into contact with a road surface, composed of a flat surface, with a load that is 70% of a standardized load being applied as a vertical load to the tire 2 in a state where the camber angle of the tire 2 in the standard state is set to 0°, on this device. In the tire 2, the ground-contact surface obtained thus is the reference ground-contact surface. The position, on the tread surface 24, corresponding to the axially outer end of the reference ground-contact surface is the above-described position PH, and is also referred to as reference ground-contact end PH.

In FIG. 1, a length indicated by a double-headed arrow WH is the width in the axial direction of the reference ground-contact surface. The width WH in the axial direction is the distance in the axial direction from one reference ground-contact end PH to the other reference ground-contact end PH. The width WH in the axial direction of the reference ground-contact surface is specified in the tire 2 in the standardized state.

Each reference ground-contact end PH is located axially inward of the reference end TE of the tread. In other words, the width WH in the axial direction of the reference ground-contact surface is smaller than the width WT of the tread 4. Specifically, the ratio (WH/WT) of the width WH in the axial direction to the width WT of the tread 4 is not less than 70% and not greater than 90%.

Each sidewall 6 is connected to an end of the tread 4. The sidewall 6 is located radially inward of the tread 4. The sidewall 6 is located axially outward of the carcass 12. The sidewall 6 is formed from a crosslinked rubber for which cut resistance is taken into consideration.

Each clinch 8 is located radially inward of the sidewall 6. As shown in FIG. 1, the clinch 8 comes into contact with the rim R. The clinch 8 is formed from a crosslinked rubber for which wear resistance is taken into consideration.

Each bead 10 is located axially inward of the clinch 8. The bead 10 is located radially inward of the sidewall 6.

The bead 10 includes a core 28 and an apex 30. The core 28 extends in the circumferential direction. The core 28 includes a steel wire which is not shown. The apex 30 is located radially outward of the core 28. The apex 30 is tapered radially outward. The apex 30 is formed from a crosslinked rubber that has high stiffness.

The carcass 12 is located inward of the tread 4, the pair of sidewalls 6, and the pair of clinches 8. The carcass 12 extends on and between a first bead 10 and a second bead 10 which are the pair of beads 10. The carcass 12 includes at least one carcass ply 32.

The carcass 12 of the tire 2 is composed of one carcass ply 32 in consideration of reduction of rolling resistance. The carcass ply 32 includes a large number of carcass cords aligned with each other, which are not shown. The carcass cords are covered with a topping rubber. The carcass cords intersect the equator plane CL. The carcass 12 of the tire 2 has a radial structure. Each carcass cord of the tire 2 is a cord formed from an organic fiber (hereinafter, referred to as organic fiber cord). Examples of the organic fiber include nylon fibers, rayon fibers, polyester fibers, and aramid fibers.

The carcass ply 32 includes a ply body 32a and a pair of first turned-up portions 32b. The ply body 32a extends between the first bead 10 and the second bead 10. Each turned-up portion 32b is connected to the ply body 32a and turned up around the bead 10 from the inner side toward the outer side in the axial direction.

The belt 14 is located radially inward of the tread 4. The belt 14 is stacked on the carcass 12.

In FIG. 1, a length indicated by a double-headed arrow WR is the width in the axial direction of the belt 14. The width WR in the axial direction is the distance in the axial direction from a first end 14e to a second end 14e of the belt 14. The width WR in the axial direction of the belt 14 is specified in the tire 2 in the standardized state. The above-described equator plane CL intersects the belt 14 at the center of the width WR in the axial direction of the belt 14.

In the tire 2, the width WR in the axial direction of the belt 14 is not less than 85% and not greater than 100% of the width WT of the tread 4.

The belt 14 includes an inner layer 34 and an outer layer 36. The inner layer 34 is located radially outward of the ply body 32a, and stacked on the ply body 32a. The outer layer 36 is located radially outward of the inner layer 34, and stacked on the inner layer 34.

In the tire 2, one or more layers may be provided between the inner layer 34 and the outer layer 36. From the viewpoint of weight reduction, the belt 14 is preferably composed of two layers including the inner layer 34 and the outer layer 36.

As shown in FIG. 1, each end 36e of the outer layer 36 is located axially inward of an end 34e of the inner layer 34. The outer layer 36 is narrower than the inner layer 34. The length from the end 36e of the outer layer 36 to the end 34e of the inner layer 34 is not less than 3 mm and not greater than 10 mm. The end 34e of the inner layer 34 is the end 14e of the belt 14.

Each of the inner layer 34 and the outer layer 36 includes a large number of belt cords aligned with each other, which are not shown. These belt cords are covered with a topping rubber. Each belt cord is tilted relative to the equator plane CL. An angle of the belt cord with respect to the equator plane CL (tilt angle of the belt cord) is not less than 10 degrees and not greater than 35 degrees. The direction in which the belt cords (inner belt cords) included in the inner layer 34 are tilted is opposite to the direction in which the belt cords (outer belt cords) included in the outer layer 36 are tilted. The tilt angle of the inner belt cords and the tilt angle of the outer belt cords are equal to each other. The belt cords of the tire 2 are steel cords.

The band 16 is located between the tread 4 and the belt 14 in the radial direction. The band 16 is stacked on the belt 14.

The band 16 includes a helically wound band cord which is not shown. The band cord is covered with a topping rubber. The band cord extends substantially in the circumferential direction. Specifically, an angle of the band cord with respect to the circumferential direction is not greater than 5°. The band 16 has a jointless structure. The band cord of the tire 2 is an organic fiber cord. Examples of the organic fiber include nylon fibers, rayon fibers, polyester fibers, and aramid fibers.

An end 16e of the band 16 is located axially outward of the end 14e of the belt 14. The length from the end 14e of the belt 14 to the end 16e of the band 16 is not less than 3 mm and not greater than 7 mm. The band 16 holds the end 14e of the belt 14.

The band 16 of this tire 2 is a full band. The band 16 has ends opposed to each other across the equator plane CL. The band 16 covers the entirety of the belt 14. The band 16 holds the entirety of the belt 14. The band 16 can contribute to suppressing a shape change of a ground-contact surface.

The band 16 may be composed of a pair of edge bands that are disposed so as to be spaced apart from each other in the axial direction with the equator plane CL therebetween and are each formed so as to cover only a portion at the end 14e of the belt 14. In this case, the band 16 contributes to reducing the weight of the tire 2. In order to increase the stiffness of the tread 4, the band 16 may include a full band and a pair of edge bands. From the viewpoint of weight reduction and stabilization of the ground-contact surface, the band 16 of this tire 2 is preferably composed of a full band like the band 16 shown in FIG. 1.

The inner liner 18 is located inward of the carcass 12. The inner liner 18 forms an inner surface 2N of the tire 2. The inner liner 18 is formed from a crosslinked rubber that has an excellent air blocking property. The inner liner 18 maintains the internal pressure of the tire 2.

The respective cushions 20 are located so as to be spaced apart from each other in the axial direction. Each cushion 20 is located between the end 14e of the belt 14 and the carcass 12. The cushion 20 is formed from a crosslinked rubber that has low stiffness. In the tire 2, the cushions 20 are not essential components. Depending on the specifications of the tire 2, the cushions 20 may not necessarily be provided.

Each insulation 22 is located between the carcass 12 and the inner liner 18. A first end 22ea of the insulation 22 is located axially inward of the end 14e of the belt 14. A second end 22eb of the insulation 22 is located radially inward of the maximum width position PW. The second end 22eb of the insulation 22 is located radially outward of the bead 10. The insulation 22 is formed from a crosslinked rubber for which adhesiveness is taken into consideration.

In the tire 2, at a portion where each insulation 22 is provided, the inner liner 18 is joined to the carcass 12 via the insulation 22. The inner liner 18 is joined directly to the carcass 12 at a portion between the first end 22ea of a first insulation 22 and the first end 22ea of a second insulation 22 (not shown), and a portion where no insulation 22 is provided, such as an inner portion from the second end 22eb of each insulation 22. The entirety of the inner liner 18 may be joined to the carcass 12 by the insulations 22. From the viewpoint of reduction of rolling resistance, as shown in FIG. 1, preferably, a pair of insulations 22 disposed so as to be spaced apart from each other in the axial direction are provided, and each insulation 22 is disposed in a zone between the end 14e of the belt 14 and the maximum width position PW.

The tread 4 of the tire 2 includes a cap layer 38, an intermediate layer 40, and a base layer 42. The cap layer 38 is located radially outward of the intermediate layer 40. The base layer 42 is located radially inward of the intermediate layer 40. The cap layer 38 is stacked on the intermediate layer 40, and the intermediate layer 40 is stacked on the base layer 42. The above-described tread surface 24 is included in the cap layer 38.

As shown in FIG. 1, each end 38e of the cap layer 38 is located axially inward of an end 40e of the intermediate layer 40, and each end 42e of the base layer 42 is located axially inward of the end 40e of the intermediate layer 40.

The cap layer 38, the intermediate layer 40, and the base layer 42 are formed from crosslinked rubbers having different heat generation properties, respectively. A loss tangent LTm at 30°C of the intermediate layer 40 is lower than a loss tangent LTc at 30°C of the cap layer 38. A loss tangent LTb at 30°C of the base layer 42 is lower than the loss tangent LTm at 30°C of the intermediate layer 40. The cap layer 38 is most likely to generate heat, and the base layer 42 is least likely to generate heat. The intermediate layer 40 has heat generation properties between that of the cap layer 38 and that of the base layer 42.

The loss tangent LTb at 30°C of the base layer 42 is preferably not greater than 0.11. This is because the base layer 42 effectively contributes to reduction of rolling resistance. From this viewpoint, the loss tangent LTb is more preferably not greater than 0.10 and further preferably not greater than 0.09. The loss tangent LTb of the base layer 42 is preferably lower, so that a preferable lower limit is not set.

The loss tangent LTm at 30°C of the intermediate layer 40 is preferably not greater than 0.15. This is because the intermediate layer 40 effectively contributes to reduction of rolling resistance. From this viewpoint, the loss tangent LTm is more preferably not greater than 0.14 and further preferably not greater than 0.13. The loss tangent LTm at 30°C of the intermediate layer 40 is preferably not less than 0.11. This is because the intermediate layer 40 can ensure required stiffness and can effectively contribute to improvement of grip performance. From this viewpoint, the loss tangent LTm is more preferably not less than 0.12.

The loss tangent LTc at 30°C of the cap layer 38 is preferably not less than 0.15. This is because the cap layer 38 can contribute to improvement of grip performance. From this viewpoint, the loss tangent LTc is more preferably not less than 0.16 and further preferably not less than 0.17. The cap layer 38 comes into contact with a road surface. From the viewpoint of improvement of grip performance, the loss tangent LTc is preferably higher. However, a higher loss tangent LTc leads to heat generation. There is a concern that the heated cap layer 38 may raise the temperature of the intermediate layer 40 more than expected. From the viewpoint of being able to stably keep the temperature of the entirety of the tread 4 and maintain low rolling resistance, the loss tangent LTc at 30°C of the cap layer 38 is preferably not greater than 0.30, more preferably not greater than 0.28, and further preferably not greater than 0.27.

Grooves 44 are formed on the tread 4 of the tire 2. The tread 4 has the grooves 44. Accordingly, a tread pattern is formed. The portion of the tread surface 24 other than the grooves 44 is also referred to as land surface 46.

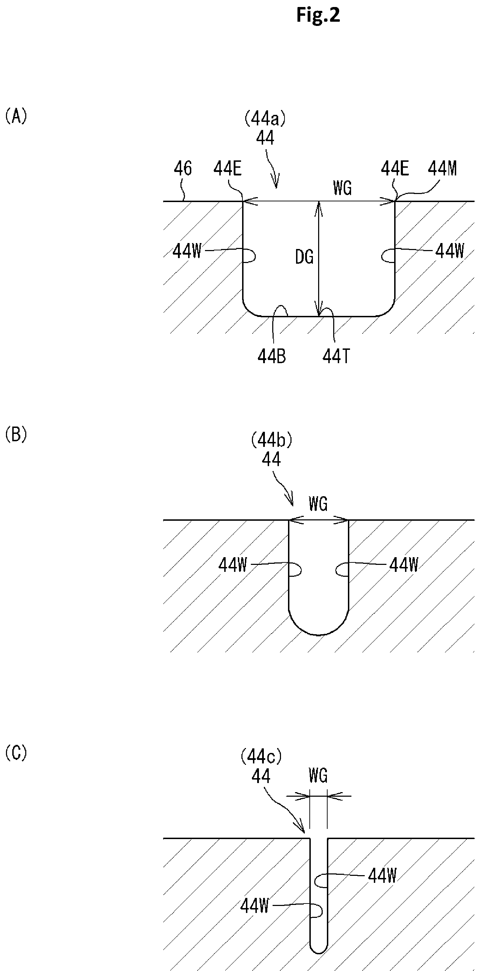

FIG. 2 shows an example of the grooves 44 formed on the tread 4. FIG. 2 shows cross-sections of these grooves 44. The main configurations of the grooves 44 will be described with reference to FIG. 2.

Each groove 44 has a pair of wall surfaces 44W including a groove opening 44M, and a bottom surface 44B including a groove bottom 44T. The groove width of the groove 44 is represented as the distance between a first wall surface 44W and a second wall surface 44W which are the pair of wall surfaces 44W, that is, the inter-wall distance.

In FIG. 2, a length indicated by each double-headed arrow WG is the groove width of the groove 44 at the groove opening 44M. The groove width WG is represented as the shortest distance from a first edge 44E to a second edge 44E which are a pair of edges 44E forming the groove opening 44M.

In the case where each edge of the groove opening 44M is chamfered and the groove opening 44M of the groove 44 is tapered, unless otherwise specified, the groove width WG at the groove opening 44M is obtained with the point of intersection of an extension line of the contour line of each wall surface 44W and an extension line of the contour line of the land surface 46 being defined as a virtual edge.

The groove bottom 44T is represented as the position at which the distance from a line segment connecting the pair of edges 44E forming the groove opening 44M to the bottom surface 44B, measured along a normal line of this line segment, becomes maximum. The distance from the line segment connecting the pair of edges 44E forming the groove opening 44M to the groove bottom 44T, measured along the normal line of this line segment, is a groove depth indicated by a double-headed arrow DG in FIG. 2.

For example, the position, the groove width WG, and the groove depth DG of the groove 44 are determined as appropriate according to the specifications of the tire 2.

A groove 44a shown in part A of FIG. 2 is a main groove. The main groove 44a has a groove width WG of not less than 1.5 mm at the groove opening 44M. The main groove 44a has a large groove width. The main groove 44a is a groove in which the pair of wall surfaces 44W do not come into contact with each other even when the tire 2 comes into contact with a road surface.

In the present invention, the groove 44 having a groove width WG of not less than 1.5 mm and exceeding 4% of the width WT of the tread 4 is a main groove.

A groove 44b shown in part B of FIG. 2 is a narrow groove. The narrow groove 44b also has a groove width WG of not less than 1.5 mm at the groove opening 44M. The narrow groove 44b has a smaller groove width than the main groove 44a.

In the present invention, the groove 44 having a groove width WG of not less than 1.5 mm and not greater than 4% of the width WT of the tread 4 is a narrow groove.

A groove 44c shown in section C in FIG. 2 is a sipe. The sipe 44c has a groove width WG of less than 1.5 mm at the groove opening 44M. The sipe 44c has an even smaller groove width than the narrow groove 44b.

In the present invention, the groove 44 having a groove width WG of less than 1.5 mm is a sipe.

When a groove 44 is formed by combining different types of grooves in the radial direction, the type of the groove 44 is specified on the basis of the groove at a portion including the groove opening 44M.

The grooves 44 of the tire 2 shown in FIG. 1 include a circumferential groove 48 continuously extending in the circumferential direction. In the tire 2, a plurality of circumferential grooves 48 are formed on the tread 4 so as to be aligned in the axial direction.

Among the plurality of circumferential grooves 48, a circumferential groove 48 located on each outermost side in the axial direction is a circumferential narrow groove 50. The circumferential narrow groove 50 is a narrow groove continuously extending in the circumferential direction.

Among the plurality of circumferential grooves 48, a circumferential groove 48 located between a pair of circumferential narrow grooves 50 is a circumferential main groove 52. The circumferential main groove 52 is a main groove continuously extending in the circumferential direction.

The plurality of circumferential grooves 48 include a plurality of circumferential main grooves 52 aligned in the axial direction, and a pair of circumferential narrow grooves 50 each located on the outermost side in the axial direction.

Four circumferential main grooves 52 are formed on the tread 4 of the tire 2 shown in FIG. 1.

Among the four circumferential main grooves 52, a circumferential main groove 52 located on each outermost side in the axial direction is a shoulder circumferential main groove 52s. A circumferential main groove 52 located axially inward of the shoulder circumferential main groove 52s is a middle circumferential main groove 52m.

The four circumferential main grooves 52 formed on the tread 4 include a pair of middle circumferential main grooves 52m and a pair of shoulder circumferential main grooves 52s.

In FIG. 1, a length indicated by a double-headed arrow d is the groove depth of the circumferential main groove 52. A length indicated by each reference character w is the groove width at the groove opening of the circumferential main groove 52.

The groove depth d of the circumferential main groove 52 is preferably not less than 70% and not greater than 95% of the thickness of the tread 4. As the thickness of the tread 4 for specifying the groove depth d, a virtual thickness obtained on the assumption that there are no grooves 44 is used. This virtual thickness is represented as the sum of the groove depth d and the tread thickness at the measurement position of the groove depth d.

The groove width w of the circumferential main groove 52 is preferably not less than 5% and not greater than 15% of the width WT of the tread 4.

By forming the plurality of circumferential main grooves 52 on the tread 4, at least three land portions 54 are formed in the tread 4 so as to be aligned in the axial direction. The plurality of circumferential main grooves 52 form at least three land portions 54 in the tread 4.

The four circumferential main grooves 52 are formed on the tread 4 shown in FIG. 1, and five land portions 54 are formed therein. Land surfaces of these land portions 54 are included in the tread surface 24.

Among the five land portions 54, a land portion 54 located on each outermost side in the axial direction is a shoulder land portion 54s. The above-described shoulder circumferential main groove 52s is a circumferential main groove 52 closest to the shoulder land portion 54s.

A land portion 54 located axially inward of the shoulder land portion 54s is a middle land portion 54m. A land portion 54 located axially inward of the middle land portion 54m, that is, a land portion 54 located at the center among the five land portions 54 which are aligned in the axial direction, is a center land portion 54c. In the tire 2, the center land portion 54c includes the equator PC. The above-described middle circumferential main groove 52m is a circumferential main groove 52 located between the middle land portion 54m and the center land portion 54c.

The five land portions 54 formed in the tread 4 include a center land portion 54c, a pair of middle land portions 54m, and a pair of shoulder land portions 54s.

The width in the axial direction of each shoulder land portion 54s is represented as the distance in the axial direction from the boundary between the shoulder circumferential main groove 52s and the land surface of the shoulder land portion 54s, that is, the outer edge of the shoulder circumferential main groove 52s, to the reference end TE of the tread 4.

In the tire 2, the ratio of the width in the axial direction of each shoulder land portion 54s to the width WT of the tread 4 is preferably not less than 15% and not greater than 30%.

The width in the axial direction of the land portion 54 located between two circumferential main grooves 52, such as the center land portion 54c and the middle land portions 54m, is represented as the width in the axial direction of the land surface thereof. This width in the axial direction is determined as appropriate in consideration of the number of circumferential main grooves 52 formed on the tread 4, the groove widths w thereof, etc.

As described above, the tread 4 of the tire 2 includes the cap layer 38, the intermediate layer 40, and the base layer 42 which have different heat generation properties. In the tire 2, at the center in the width direction of the land portion 54, the ratio of the thickness of the cap layer 38 to the thickness of the tread 4 is preferably not less than 10% and not greater than 40%. At the center in the width direction of the land portion 54, the ratio of the thickness of the intermediate layer 40 to the thickness of the tread 4 is not less than 30% and not greater than 70%.

The base layer 42 of the tread 4 of the tire 2 corresponds to a base portion of a conventional tread composed of a cap portion and the base portion, and a portion, of the tread 4, composed of the cap layer 38 and the intermediate layer 40 corresponds to the cap portion of the conventional tread.

In the tread 4 of the tire 2, the portion corresponding to the cap portion of the conventional tread includes the intermediate layer 40 in addition to the cap layer 38 which is formed from a crosslinked rubber for which grip performance is taken into consideration.

As described above, the intermediate layer 40 has heat generation properties between that of the cap layer 38 and that of the base layer 42. In other words, the intermediate layer 40 is formed from a crosslinked rubber for which low heat generation properties are taken into consideration while grip performance is slightly sacrificed.

Furthermore, in the tread 4, as described above, each end 38e of the cap layer 38 is located axially inward of the end 40e of the intermediate layer 40. The cap layer 38 covers a part of the intermediate layer 40 rather than the entire intermediate layer 40. In the tire 2, as compared to a tread in which the entire intermediate layer 40 is covered with the cap layer 38, the volume of the cap layer 38 which causes an increase in rolling resistance is reduced, and the volume of the intermediate layer 40 which contributes to reduction of rolling resistance is increased.

The tread 4 can contribute to reduction of rolling resistance.

If the tread 4 is worn, the intermediate layer 40 is exposed. Since the intermediate layer 40 is formed from a crosslinked rubber for which low heat generation properties are taken into consideration while grip performance is slightly sacrificed, there is a concern that grip performance may be decreased.

However, if a tread is worn, the volume thereof is decreased. Since the deformation allowance when a force acts on the tread becomes smaller, the difference due to the material of the tread which comes into contact with a road surface is less likely to be reflected in grip performance. Therefore, although the intermediate layer 40 is formed from a crosslinked rubber for which grip performance is slightly sacrificed, even if the tread 4 is worn and the intermediate layer 40 is exposed, the tire 2 can maintain good grip performance as in a conventional tire.

Also, in the tread 4, as described above, each end 42e of the base layer 42 is located axially inward of the end 40e of the intermediate layer 40. As shown in FIG. 1, the intermediate layer 40 covers the entire base layer 42. Since the intermediate layer 40 having a sufficient thickness is located between the outer surface 2G of the tire 2 and the base layer 42, even if a vehicle runs under a harsh condition in which a large inertial force is generated and which may cause wear at a boundary portion (hereinafter, referred to as buttress) between the tread 4 and the sidewall 6, exposure of the base layer 42 is prevented. The tread 4 can stably exhibit its function.

Thus, by forming the tread 4 with three layers including the cap layer 38, the intermediate layer 40, and the base layer 42, the tire 2 can have reduced rolling resistance while suppressing influence on grip performance.

As described above, in order to further reduce rolling resistance, the present inventor has conducted a study focusing on formation of a tread with three layers as well as strain generated in the tread. In this study, the present inventor has found that strain is generated more frequently near the surface of each shoulder land portion (especially near each end 36e of the outer layer 36 of the belt 14), that the generation of the strain can be suppressed by forming a narrow groove on the shoulder land portion, and that the cross-sectional shape of the narrow groove is deeply related to the reduction allowances of strain and heat generation in the tread formed with three layers, thereby achieving further reduction of the rolling resistance of the tire 2.

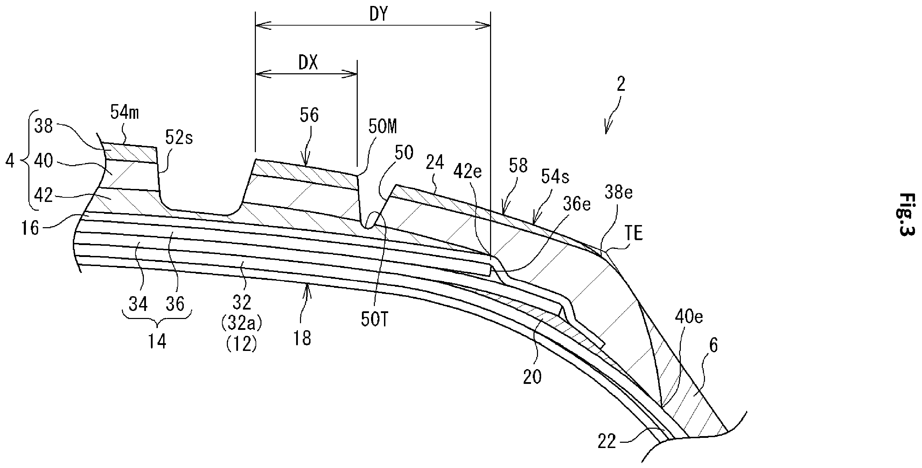

FIG. 3 shows a part of the tire 2 shown in FIG. 1. FIG. 3 shows the shoulder land portion 54s of a tread portion.

A circumferential narrow groove 50 is formed on each shoulder land portion 54s of the tire 2. As described above, the circumferential narrow groove 50 continuously extends in the circumferential direction. The circumferential narrow groove 50 forms an inner land portion 56 and an outer land portion 58 in the shoulder land portion 54s.

As shown in FIG. 3, the groove width of the circumferential narrow groove 50 is smaller than the groove width of the shoulder circumferential main groove 52s. The influence of the circumferential narrow groove 50 on the stiffness of the shoulder land portion 54s is small. The shoulder land portion 54s has required stiffness. In the tire 2, reduction of a cornering force is suppressed.

The circumferential narrow groove 50 is located between the shoulder circumferential main groove 52s and the end 36e of the outer layer 36 in the axial direction. The circumferential narrow groove 50 can contribute to suppressing generation of strain near the end 36e of the outer layer 36, which is observed in a conventional shoulder land portion on which the circumferential narrow groove 50 is not formed. Since generation of strain is suppressed, the tire 2 can have further reduced rolling resistance.

As shown in FIG. 3, the circumferential narrow groove 50 is tapered from a groove opening 50M toward a groove bottom 50T. The groove width of the circumferential narrow groove 50 gradually decreases from the groove opening 50M toward the groove bottom 50T without increasing in the middle. The circumferential narrow groove 50 has a V cross-sectional shape. As described above, the tread 4 of the tire 2 is formed with three layers including the cap layer 38, the intermediate layer 40, and the base layer 42. In the case where the circumferential narrow groove 50 is formed, the volume of the cap layer 38 is reduced and the volume of the intermediate layer 40 is increased, as compared to the case where a circumferential narrow groove having opposing wall surfaces parallel to each other, in other words, a circumferential narrow groove having a U cross-sectional shape, is formed. The tire 2 can have even further reduced rolling resistance as compared to the case where a circumferential narrow groove having a U cross-sectional shape is formed on each shoulder land portion.

As described above, in the tread 4 of the tire 2, the portion corresponding to the cap portion of the conventional tread includes the cap layer 38 for which grip performance is mainly taken into consideration, and the intermediate layer 40 for which low heat generation properties are taken into consideration while grip performance is slightly sacrificed. Furthermore, the circumferential narrow groove 50 narrower than the shoulder circumferential main groove 52s is formed on the shoulder land portion 54s of the tread 4, and this circumferential narrow groove 50 is located between the shoulder circumferential main groove 52s and the end 36e of the outer layer 36. The circumferential narrow groove 50 is tapered from the groove opening 50M toward the groove bottom 50T.

The tread 4 can contribute to reducing rolling resistance while reducing a decrease in grip performance to be small. The tire 2 can achieve reduction of rolling resistance while suppressing influence on grip performance.

In FIG. 3, a length indicated by a double-headed arrow DY is the distance in the axial direction from the shoulder circumferential main groove 52s to the end 36e of the outer layer 36. A length indicated by a double-headed arrow DX is the distance in the axial direction from the shoulder circumferential main groove 52s to the circumferential narrow groove 50. The distance DX in the axial direction is the width in the axial direction of the land surface of the inner land portion 56.

The ratio (DX/DY) of the distance DX from the shoulder circumferential main groove 52s to the circumferential narrow groove 50 to the distance DY in the axial direction from the shoulder circumferential main groove 52s to the end 36e of the outer layer 36 is preferably not less than 15% and not greater than 55%.

When the ratio (DX/DY) is set to be not less than 15%, interference between the circumferential narrow groove 50 and the shoulder circumferential main groove 52s is suppressed. Since the inner land portion 56 has required stiffness, the circumferential narrow groove 50 can effectively contribute to suppressing generation of strain. Since generation of strain is suppressed, the tire 2 can have reduced rolling resistance. From this viewpoint, the ratio (DX/DY) is preferably not less than 25%, more preferably not less than 35%, and further preferably not less than 45%.

When the ratio (DX/DY) is set to be not greater than 55%, the circumferential narrow groove 50 is located at an appropriate distance from the end 36e of the outer layer 36. Interference between the circumferential narrow groove 50 and the end 36e of the outer layer 36 is suppressed. Occurrence of damage such as loosening in a portion at the end 36e of the outer layer 36 is suppressed. In this case as well, the circumferential narrow groove 50 can stably and sufficiently exhibit a function of suppressing generation of strain. Since generation of strain is suppressed, the tire 2 can have reduced rolling resistance. From this viewpoint, the ratio (DX/DY) is more preferably not greater than 50%.

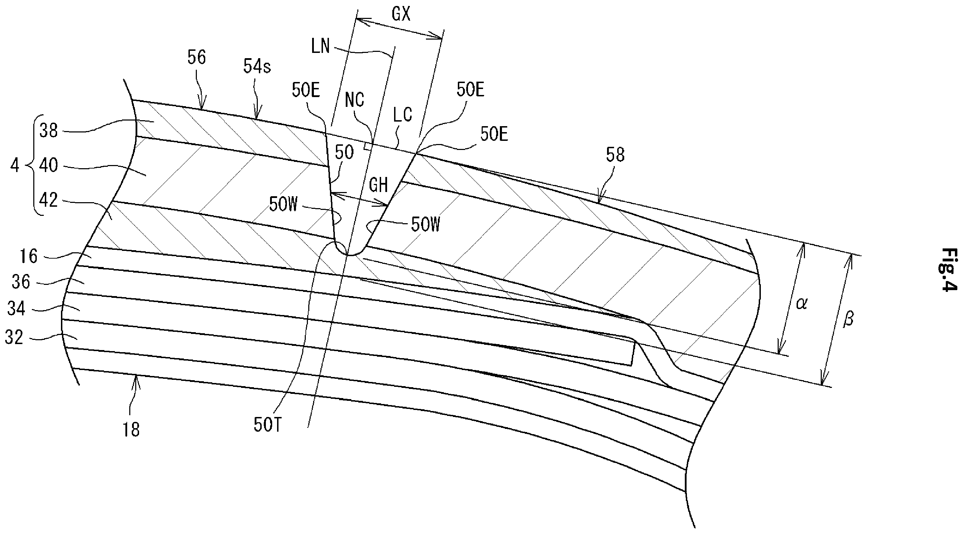

FIG. 4 shows a part of the shoulder land portion 54s shown in FIG. 3. FIG. 4 shows a portion where the circumferential narrow groove 50 is provided.

In FIG. 4, a straight line indicated by reference character LC is a line segment connecting a pair of edges 50E forming the groove opening 50M of the circumferential narrow groove 50. A length indicated by a double-headed arrow GX is the groove width at the groove opening 50M of the circumferential narrow groove 50. The groove width GX is represented as the length of the line segment LC.

A solid line LN is a normal line of the above-described line segment LC that passes through the groove bottom 50T of the circumferential narrow groove 50. A position indicated by reference character NC is the point of intersection of the line segment LC and the normal line LN.

A length indicated by a double-headed arrow $\alpha$ is the groove depth of the circumferential narrow groove 50. The groove depth $\alpha$ is represented as the distance, from the point of intersection NC to the groove bottom 50T, measured along the normal line LN.

A length indicated by a double-headed arrow $\beta$ is the thickness of the tread 4. The thickness $\beta$ is represented as the distance, from the point of intersection NC to the inner surface of the tread 4, measured along a line segment representing the groove depth $\alpha$.

The groove width GX at the groove opening 50M of the circumferential narrow groove 50 is smaller than the groove width at the groove opening of the shoulder circumferential main groove 52s. The smaller the groove width GX is, the more the influence of the circumferential narrow groove 50 on the stiffness of the shoulder land portion 54s is reduced. However, if the groove width GX is less than 2.5% of the width WT of the tread 4, the circumferential narrow groove 50 has a shape similar to a sipe, so that the circumferential narrow groove 50 may be unable to function as a narrow groove. In this case, there is a concern that the circumferential narrow groove 50 may be unable to sufficiently suppress generation of strain.

Therefore, in the tire 2, the ratio (GX/WT) of the groove width GX of the circumferential narrow groove 50 to the width WT of the tread 4 is preferably not less than 2.5%. Accordingly, the circumferential narrow groove 50 can effectively contribute to suppressing generation of strain. Since generation of strain is suppressed, the tire 2 can have reduced rolling resistance. From this viewpoint, the ratio (GX/WT) is more preferably not less than 2.8%.

The ratio (GX/WT) is preferably not greater than 3.5%. Accordingly, the influence of the circumferential narrow groove 50 on the stiffness of the shoulder land portion 54s is suppressed. The tire 2 can maintain good grip performance. From this viewpoint, the ratio (GX/WT) is more preferably not greater than 3.2%.

From the viewpoint of reducing rolling resistance and maintaining grip performance, the ratio (GX/WT) is particularly preferably 3.0%.

In the tire 2, the ratio ($\alpha$/$\beta$) of the groove depth $\alpha$ of the circumferential narrow groove 50 to the thickness $\beta$ of the tread 4 is preferably not less than 60% and not greater than 95%.

When the ratio ($\alpha$/$\beta$) is set to be not less than 60%, the circumferential narrow groove 50 can effectively contribute to suppressing generation of strain. Since generation of strain is suppressed, the tire 2 can have reduced rolling resistance. From this viewpoint, the ratio ($\alpha$/$\beta$) is more preferably not less than 75% and further preferably not less than 85%.

When the ratio ($\alpha$/$\beta$) is set to be not greater than 95%, the groove bottom 50T of the circumferential narrow groove 50 is located at an appropriate distance from the band 16. In the tire 2, occurrence of an appearance defect caused by the groove bottom 50T of the circumferential narrow groove 50 being located close to the band 16 is prevented. From this viewpoint, the ratio ($\alpha$/$\beta$) is more preferably not greater than 90%.

In FIG. 4, a length indicated by a double-headed arrow GH is the groove width at the half position of the groove depth $\alpha$ of the circumferential narrow groove 50. A line segment representing the groove width GH is parallel to the above-described line segment LC representing the groove width GX.

In the tire 2, the difference ((GX-GH)/WT) between the ratio (GX/WT) of the groove width GX at the groove opening 50M of the circumferential narrow groove 50 to the width WT of the tread 4 and the ratio (GH/WT) of the groove width GH at the half position of the groove depth α of the circumferential narrow groove 50 to the width WT of the tread 4 is preferably not less than 0.5% and not greater than 1.5%. Accordingly, the circumferential narrow groove 50 which is tapered in the groove depth direction can more effectively contribute to reduction of rolling resistance. From this viewpoint, the difference ((GX-GH)/WT) is preferably not less than 0.8% and not greater than 1.2%. The difference ((GX-GH)/WT) is particularly preferably 1.0%.

In the tire 2, each circumferential narrow groove 50 is shallower than each shoulder circumferential main groove 52s. On each shoulder land portion 54s of the tread 4, the circumferential narrow groove 50 shallower than the shoulder circumferential main groove 52s is formed. As described above, the circumferential narrow groove 50 narrower than the shoulder circumferential main groove 52s is formed on each shoulder land portion 54s of the tread 4, this circumferential narrow groove 50 is located between the shoulder circumferential main groove 52s and the end 36e of the outer layer 36, and this circumferential narrow groove 50 is tapered from the groove opening 50M toward the groove bottom 50T.

The tread 4 can effectively contribute to reducing rolling resistance while reducing a decrease in grip performance to be small. The tire 2 can achieve reduction of rolling resistance while suppressing influence on grip performance. From this viewpoint, the circumferential narrow groove 50 is preferably shallower than the shoulder circumferential main groove 52s. Specifically, the ratio (α/d) of the groove depth α of the circumferential narrow groove 50 to the groove depth d of the shoulder circumferential main groove 52s is preferably not greater than 0.85 and more preferably not greater than 0.80. From the viewpoint that the circumferential narrow groove 50 can effectively contribute to suppressing generation of strain, the ratio (α/d) is preferably not less than 0.65 and further preferably not less than 0.70.

In the meridian cross-section of the tire 2, a contour line of each wall surface of each circumferential narrow groove 50 is a straight line. As long as the tire 2 satisfies that the above-described ratio (GX/WT) is not less than 2.5% and not greater than 3.5% and the above-described difference ((GX-GH)/WT) is not less than 0.5% and not greater than 1.5%, from the viewpoint of being able to reduce the volume of the cap layer 38 and ensure the volume of the intermediate layer 40, the contour line of the wall surface of the circumferential narrow groove 50 may be configured to have an inwardly convex shape. In this case, the entire contour line of the wall surface of the circumferential narrow groove 50 may be represented by an arc configured to curve inwardly, or the contour line of the wall surface may be made smooth by chamfering at the edge of the circumferential narrow groove 50.

As described above, of the tread 4 of the tire 2, the portion composed of the cap layer 38 and the intermediate layer 40 corresponds to the cap portion of the tread, of the conventional tire, composed of the cap portion and the base portion. In the tire 2, from the viewpoint that the tread 4 can effectively contribute to improvement of grip performance and reduction of rolling resistance, the ratio (LTc/LTm) of the loss tangent LTc at 30°C of the cap layer 38 to the loss tangent LTm at 30°C of the intermediate layer 40 is preferably not less than 110% and not greater than 250%. The ratio (LTc/LTm) is more preferably not less than 130% and further preferably not less than 150%. The ratio (LTc/LTm) is more preferably not greater than 240% and further preferably not greater than 230%.

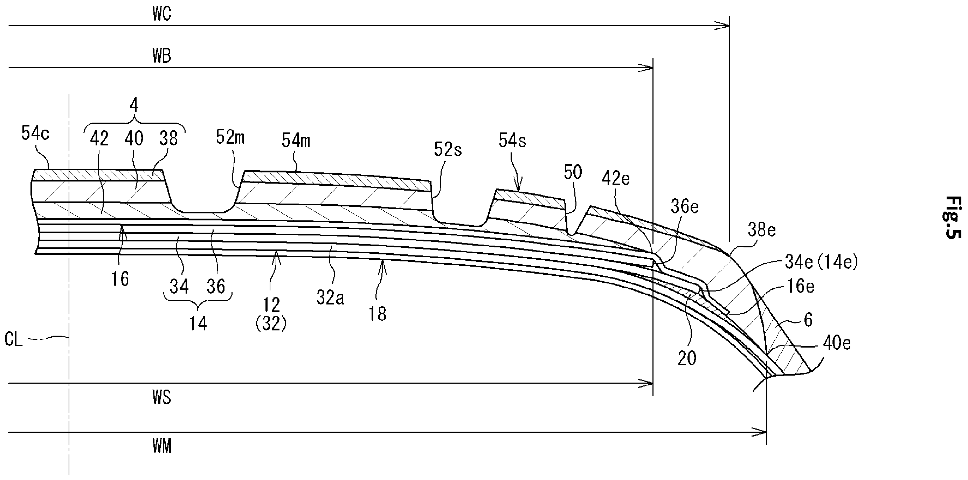

FIG. 5 shows a part of the tire 2 shown in FIG. 1. FIG. 5 shows a part of the tread portion. As shown in FIG. 5, the end 42e of the base layer 42 is located axially inward of the end 34e of the inner layer 34. The position of the end 42e of the base layer 42 substantially coincides with the position of the end 36e of the outer layer 36 in the axial direction.

In FIG. 5, a length indicated by a double-headed arrow WB is the width in the axial direction of the base layer 42. The width WB in the axial direction is the distance in the axial direction from a first end 42e to a second end 42e of the base layer 42. A length indicated by a double-headed arrow WS is the width in the axial direction of the outer layer 36. The width WS in the axial direction is the distance in the axial direction from a first end 36e to a second end 36e of the outer layer 36.

In a tire during running, a portion at each shoulder land portion thereof actively moves. Therefore, various types of strain which is a factor that increases rolling resistance is generated in this portion. Strain generated in a portion at each end of a belt is also a factor that causes damage such as belt edge loose (BEL).

In order to ensure a volume of a base portion formed from a crosslinked rubber that has low heat generation properties and to reduce rolling resistance, in a conventional tire, a tread is formed such that each end of the base portion is located axially outward of an end of a band and the base portion covers the entireties of a belt and the band.

However, the strength of the crosslinked rubber that has low heat generation properties is low. Therefore, in the conventional tread having the above-described configuration, the existence of risk of occurrence of damage such as BEL is undeniable. Establishment of a technology capable of achieving reduction of the risk of damage is also required such that the tire can continue to stably exhibit a rolling resistance reduction effect.

In the tire 2, by forming the circumferential narrow groove 50 in the specific region of each shoulder land portion 54s, generation of strain which is a factor that increases rolling resistance is suppressed. Therefore, even when the tread 4 is formed such that each end 42e of the base layer 42 is located axially inward of the end 34e of the inner layer 34, the rolling resistance of the tire 2 can be reduced. Since the portion at the end 14e of the belt 14 can be covered with the intermediate layer 40 instead of the base layer 42, the risk of occurrence of damage such as BEL can be reduced. The tire 2 can continue to stably exhibit a rolling resistance reduction effect. The tire 2 can contribute to improvement of the fuel efficiency of a vehicle. Since a crosslinked rubber for which grip performance is taken into consideration is used for the intermediate layer 40, the tire 2 can also continue to exhibit good grip performance. From this viewpoint, in the tire 2, each end 42e of the base layer 42 is preferably located axially inward of the end 34e of the inner layer 34.

From the viewpoint of reducing the risk of occurrence of damage, preferably, the position of the end 42e of the base layer 42 substantially coincides with the position of the end 36e of the outer layer 36 in the axial direction. Specifically, the ratio (WB/WS) of the width WB in the axial direction of the base layer 42 to the width WS in the axial direction of the outer layer 36 is preferably not less than 95% and not greater than 105%.

When the ratio (WB/WS) is set to be not less than 95%, the volume of the base layer 42 in the tread 4 is increased. The tread 4 can contribute to reducing rolling resistance. From this viewpoint, the ratio (WB/WS) is more preferably not less than 98%.

When the ratio (WB/WS) is set to be not greater than 105%, the base layer 42 is placed so as to be sufficiently spaced apart from the ends of the belt 14 and the band 16. The placement of the base layer 42 can contribute to reducing the risk of occurrence of damage. From this viewpoint, the ratio (WB/WS) is more preferably not greater than 102%.

In FIG. 5, a length indicated by a double-headed arrow WC is the width in the axial direction of the cap layer 38. The width WC in the axial direction is the distance in the axial direction from a first end 38e to a second end 38e of the cap layer 38. A length indicated by a double-headed arrow WM is the width in the axial direction of the intermediate layer 40. The width WM in the axial direction is the distance in the axial direction from a first end 40e to a second end 40e of the intermediate layer 40.

In the tire 2, from the viewpoint that the cap layer 38 can effectively contribute to exhibiting grip performance, the ratio (WC/WA) of the width WC in the axial direction of the cap layer 38 to the cross-sectional width WA of the tire 2 is preferably not less than 70% and more preferably not less than 75%. From the viewpoint of effectively suppressing the influence of the cap layer 38 on rolling resistance, the ratio (WC/WA) is preferably not greater than 90% and more preferably not greater than 85%.

In the tire 2, from the viewpoint of improvement of grip performance, the difference (WM-WC) between the width WM in the axial direction of the intermediate layer 40 and the width WC in the axial direction of the cap layer 38 is preferably not greater than 30 mm and more preferably not greater than 20 mm. From the viewpoint that reduction of rolling resistance can be achieved and the intermediate layer 40 can effectively contribute to preventing exposure of the base layer 42 during limit running, the difference (WM-WC) is preferably not less than 10 mm. In the tire 2, from the viewpoint of being able to effectively reduce rolling resistance while preventing exposure of the base layer 42, the difference (WM-WC) is particularly preferably 10 mm.

During braking, a large load acts on the tire 2. Accordingly, the ground-contact width of the tire 2 tends to increase. As shown in FIG. 1, in the tire 2, the outer end 38e of the cap layer 38 is located outward of the reference ground-contact end PH in the axial direction. Even during braking, the cap layer 38 can come into sufficient contact with a road surface. In the tire 2, good grip performance is achieved. From this viewpoint, the outer end 38e of the cap layer 38 is preferably located outward of the reference ground-contact end PH in the axial direction.

In the tire 2, preferably, the difference (WC-WT) between the width WC in the axial direction of the cap layer 38 and the width WT of the tread 4 is not less than -10 mm and not greater than 10 mm. In other words, preferably, the width WC in the axial direction of the cap layer 38 is substantially equal to the width WT of the tread 4. Accordingly, not only during straight running but also during braking in which a large load acts, the cap layer 38 can come into sufficient contact with a road surface. In the tire 2, good grip performance is achieved. From this viewpoint, the difference (WC-WT) is preferably not less than -5 mm and preferably not greater than 5 mm.

As described above, according to the present invention, the tire 2 that can achieve reduction of rolling resistance while suppressing influence on grip performance, is obtained. In particular, the present invention exhibits a remarkable effect in the tire 2 for a passenger car in which the ratio of the width in the axial direction of each shoulder land portion 54s to the width WT of the tread 4 is not less than 15% and not greater than 30%.

EXAMPLES

[Example 1]

A pneumatic tire for a passenger car (tire designation = 205/55R16 91V) having the basic structure shown in FIG. 1 and having specifications shown in Table 1 below was obtained.

The fact that the cross-sectional shape of the circumferential narrow groove is a V shape is indicated as "V" in the cell for "Shape" in Table 1. The ratio (DX/DY) was set to 50%. The ratio (GX/WT) was 3.0%, and the difference ((GX-GH)/WT) was 1.0%.

[Comparative Example 1]

A tire of Comparative Example 1 was obtained in the same manner as Example 1, except that no circumferential narrow groove was provided.

[Comparative Example 2]

A tire of Comparative Example 2 was obtained in the same manner as Example 1, except that the cross-sectional shape of the circumferential narrow groove was changed to a U shape without changing the groove volume of the circumferential narrow groove. Comparative Example 2 corresponds to the case where a circumferential narrow groove that is not tapered from a groove opening toward a groove bottom is provided. The groove width of the circumferential narrow groove of Comparative Example 2 is uniform from the groove opening toward the groove bottom. The ratio (GX/WT) was 3.0%, and the difference ((GX-GH)/WT) was 0.0%.

[Rolling Resistance]

Using a rolling resistance testing machine, a rolling resistance coefficient (RRC) was measured when a test tire ran on a drum at a speed of 80 km/h under the following conditions, and the reciprocal of the rolling resistance coefficient was obtained. The results are shown as indexes in the cells for "RRC" in Table 1 below with the result of Comparative Example 1 being regarded as 100. The higher the value is, the lower the rolling resistance of the tire is.

Rim: 16×6.5J
Internal pressure: 210 kPa
Vertical load: 4.82 kN

[Steering Stability]

A test tire was fitted onto a rim (size = 16×6.5J) and inflated with air to adjust the internal pressure thereof to 250 kPa. The tire was mounted to a flat belt type tire testing machine. A camber angle was set to 0 degrees. A vertical load of 4.3 kN was applied to the tire, a slip angle was set to 1.0 degree, the tire was caused to run on a belt at a speed of 10 km/h, and the cornering force was measured. The results are shown as indexes in the cells for "CF" in Table 1 below with the result of Comparative Example 1 being regarded as 100. The higher the value is, the larger the cornering force is and the better the steering stability is.

[Grip Performance]

Test tires were fitted onto rims (size = 16×6.5J) and inflated with air to adjust the internal pressures of the tires to 250 kPa. The tires were mounted to a test vehicle (passenger car). The test vehicle was driven on a test course with a dry road surface, and lap times were measured. The results are shown as indexes in the cells for "Grip performance" in Table 1 below with the result of Comparative Example 1 being regarded as 100. The higher the value is, the better the grip performance is.

[Durability]

A test tire was fitted onto a rim (size = 16×6.5J) and inflated with air to adjust the internal pressure thereof to 250 kPa. The tire was mounted to a drum type tire testing machine. A vertical load of 7.33 kN was applied to the tire, and the tire was caused to run on a drum (radius = 1.7 m) at a speed of 100 km/h. The running distance was measured until damage (BEL) to the tire was observed. The results are shown in the cells for "Durability" in Table 1 below with the result of Comparative Example 1 being regarded as 100. The higher the value is, the less likely damage occurs and the better the durability is.

[Combined Performance]

The total of the indexes obtained in the respective evaluation items was calculated. The results are shown in the cells for "Combined" in Table 1 below. A higher value represents that the respective performances are better balanced.

[Table 1]

|  | Comparative Example 1 | Comparative Example 2 | Example 1 |
|---|---|---|---|
| Shape | - | U | V |
| RRC | 100.0 | 101.3 | 103.4 |
| CF | 100.0 | 99.0 | 99.0 |
| Grip performance | 100.0 | 99.0 | 99.0 |
| Durability | 100.0 | 100.0 | 100.0 |
| Combined | 400.0 | 399.3 | 401.4 |

As shown in Table 1, it is confirmed that, in each Example, reduction of rolling resistance is achieved while suppressing influence on grip performance, and a rolling resistance reduction effect is continuously exhibited. From the evaluation results, advantages of the present invention are clear.

The above-described technology capable of achieving reduction of rolling resistance while suppressing influence on grip performance can also be applied to various tires.

## Claims

1. A tire (2) comprising a tread (4) configured to come into contact with a road surface, and a belt (14) located radially inward of the tread (4), wherein

   the tread (4) includes a cap layer (38), an intermediate layer (40) having a loss tangent (LTm) at 30°C lower than a loss tangent (LTc) at 30°C of the cap layer (38), and a base layer (42) having a loss tangent (LTb) at 30°C lower than the loss tangent (LTm) at 30°C of the intermediate layer (40), the loss tangent being measured using a viscoelasticity spectrometer according to the standards of JIS K6394 at the following measurement conditions: initial strain = 10%, dynamic distortion = $\pm1\%$, frequency = 10 Hz, mode = "stretch mode",
   the cap layer (38) is located radially outward of the intermediate layer (40),
   the base layer (42) is located radially inward of the intermediate layer (40),
   each end (38e) of the cap layer (38) is located axially inward of an end (40e) of the intermediate layer (40),
   each end (42e) of the base layer (42) is located axially inward of the end (40e) of the intermediate layer (40),
   the belt (14) includes an inner layer (34) and an outer layer (36) located radially outward of the inner layer (34),
   each end (36e) of the outer layer (36) is located axially inward of an end (34e) of the inner layer (34),
   a plurality of circumferential main grooves (52) are formed on the tread (4) so as to continuously extend in a circumferential direction, and at least three land portions (54) are formed in the tread (4) so as to be aligned in an axial direction,
   the at least three land portions (54) include a shoulder land portion (54s) which is a land portion (54) located on each outermost side in the axial direction,
   the plurality of circumferential main grooves (52) include a shoulder circumferential main groove (52s) which is a circumferential main groove (52) closest to the shoulder land portion (54s),
   a circumferential narrow groove (50) is formed on the shoulder land portion (54s) so as to continuously extend in the circumferential direction,
   a groove width of the circumferential narrow groove (50) is smaller than a groove width of the shoulder circumferential main groove (52s),
   the circumferential narrow groove (50) is located between the shoulder circumferential main groove (52s) and the end (36e) of the outer layer (36) in the axial direction, and
   the circumferential narrow groove (50) is tapered from a groove opening (50M) toward a groove bottom (50T), wherein a ratio (GX/WT) of a groove width (GX) at the groove opening (50M) of the circumferential narrow groove (50) to a width (WT) of the tread (4) is not less than 2.5% and not greater than 3.5%.

2. The tire (2) according to claim 1, wherein a groove width (w) of the circumferential main grooves (52) is not less than 5% and not greater than 15% of the width (WT) of the tread (4).

3. The tire (2) according to claim 1 or 2, wherein a difference ((GX-GH)/WT) between the ratio (GX/WT) of the groove width (GX) at the groove opening (50M) of the circumferential narrow groove (50) to the width (WT) of the tread (4) and a ratio (GH/WT) of a groove width (GH) at a half position of a groove depth ($\alpha$) of the circumferential narrow groove (50) to the width (WT) of the tread (4) is not less than 0.5% and not greater than 1.5%.

4. The tire (2) according to any one of claims 1 to 3, wherein a ratio ($\alpha/\beta$) of the groove depth ($\alpha$) of the circumferential narrow groove (50) to a thickness ($\beta$) of the tread (4) is not less than 60% and not greater than 95%.

5. The tire (2) according to any one of claims 1 to 4, wherein a ratio (DX/DY) of a distance (DX) in the axial direction from the shoulder circumferential main groove (52s) to the circumferential narrow groove (50) to a distance (DY) in the axial direction from the shoulder circumferential main groove (52s) to the end (36e) of the outer layer (36) is not less than 15% and not greater than 55%.

6. The tire (2) according to any one of claims 1 to 5, wherein a ratio ($\alpha/d$) of a groove depth ($\alpha$) of the circumferential narrow groove (50) to the groove depth (d) of the shoulder circumferential main groove (52s) is not greater than 0.85 and not less than 0.65.

**Patentansprüche**

1. Reifen (2), umfassend eine Lauffläche (4), die so konfiguriert ist, dass sie mit einer Straßenoberfläche in Kontakt kommt, und einen Gürtel (14), der sich radial innen von der Lauffläche (4) befindet, wobei

die Lauffläche (4) eine Deckschicht (38), eine Zwischenschicht (40) mit einem Verlusttangens (LTm) bei 30 °C, der niedriger als ein Verlusttangens (LTc) bei 30 °C der Deckschicht (38) ist, und eine Basisschicht (42) mit einem Verlusttangens (LTb) bei 30 °C, der niedriger als der Verlusttangens (LTm) bei 30 °C der Zwischenschicht (40) ist, umfasst, wobei der Verlusttangens unter Verwendung eines Viskoelastizitätsspektrometers gemäß den Normen von JIS K6394 unter den folgenden Messbedingungen gemessen ist: Anfangsdehnung = 10 %, dynamischer Verzug = $\pm$ 1 %, Frequenz = 10 Hz, Modus = "Streckmodus",
die Deckschicht (38) sich radial außen von der Zwischenschicht (40) befindet,
die Basisschicht (42) sich radial innen von der Zwischenschicht (40) befindet,
jedes Ende (38e) der Deckschicht (38) sich axial innen von einem Ende (40e) der Zwischenschicht (40) befindet,
jedes Ende (42e) der Basisschicht (42) sich axial innen von dem Ende (40e) der Zwischenschicht (40) befindet,
der Gürtel (14) eine innere Schicht (34) und eine äußere Schicht (36), die sich radial außen von der inneren Schicht (34) befindet, umfasst,
jedes Ende (36e) der äußeren Schicht (36) sich axial innen von einem Ende (34e) der inneren Schicht (34) befindet,
eine Vielzahl von Umfangshauptrillen (52) auf der Lauffläche (4) so gebildet ist, dass sie sich kontinuierlich in einer Umfangsrichtung erstreckt, und mindestens drei Landabschnitte (54) in der Lauffläche (4) so gebildet sind, dass sie in einer axialen Richtung ausgerichtet sind,
die mindestens drei Landabschnitte (54) einen Schulterlandabschnitt (54s) umfassen, der ein Landabschnitt (54) ist, der sich auf jeder äußersten Seite in der axialen Richtung befindet,
die Vielzahl von Umfangshauptrillen (52) eine Schulterumfangshauptrille (52s) umfasst, die eine Umfangshauptrille (52) ist, die dem Schulterlandabschnitt (54s) am nächsten ist,
eine schmale Umfangsrille (50) an dem Schulterlandabschnitt (54s) so gebildet ist, dass sie sich kontinuierlich in der Umfangsrichtung erstreckt,
eine Rillenbreite der schmalen Umfangsrille (50) kleiner als eine Rillenbreite der Schulterumfangshauptrille (52s) ist,
die schmale Umfangsrille (50) sich zwischen der Schulterumfangshauptrille (52s) und dem Ende (36e) der äußeren Schicht (36) in der axialen Richtung befindet, und
die schmale Umfangsrille (50) sich von einer Rillenöffnung (50M) zu einem Rillenboden (50T) verjüngt,
wobei ein Verhältnis (GX/WT) einer Rillenbreite (GX) an der Rillenöffnung (50M) der schmalen Umfangsrille (50) zu einer Breite (WT) der Lauffläche (4) nicht weniger als 2,5 % und nicht mehr als 3,5 % beträgt.

2. Reifen (2) nach Anspruch 1, wobei eine Rillenbreite (w) der Umfangshauptrillen (52) nicht weniger als 5 % und nicht mehr als 15 % der Breite (WT) der Lauffläche (4) beträgt.

3. Reifen (2) nach Anspruch 1 oder 2, wobei eine Differenz ((GX-GH)/WT) zwischen dem Verhältnis (GX/WT) der Rillenbreite (GX) an der Rillenöffnung (50M) der schmalen Umfangsrille (50) zu der Breite (WT) der Lauffläche (4) und einem Verhältnis (GH/WT) einer Rillenbreite (GH) an einer halben Position einer Rillentiefe ($\alpha$) der schmalen

Umfangsrille (50) zu der Breite (WT) der Lauffläche (4) nicht weniger als 0,5 % und nicht mehr als 1,5 % beträgt.

4. Reifen (2) nach einem der Ansprüche 1 bis 3, wobei ein Verhältnis ($\alpha$/$\beta$) der Rillentiefe ($\alpha$) der schmalen Umfangsrille (50) zu einer Dicke ($\beta$) der Lauffläche (4) nicht weniger als 60 % und nicht mehr als 95 % beträgt.

5. Reifen (2) nach einem der Ansprüche 1 bis 4, wobei ein Verhältnis (DX/DY) eines Abstands (DX) in der axialen Richtung von der Schulterumfangshauptrille (52s) zu der schmalen Umfangsrille (50) zu einem Abstand (DY) in der axialen Richtung von der Schulterumfangshauptrille (52s) zu dem Ende (36e) der äußeren Schicht (36) nicht weniger als 15 % und nicht mehr als 55 % beträgt.

6. Reifen (2) nach einem der Ansprüche 1 bis 5, wobei ein Verhältnis ($\alpha$/d) einer Rillentiefe ($\alpha$) der schmalen Umfangsrille (50) zu der Rillentiefe (d) der Schulterumfangshauptrille (52s) nicht mehr als 0,85 und nicht weniger als 0,65 beträgt.

**Revendications**

1. Pneumatique (2) comprenant une bande de roulement (4) configurée pour venir en contact avec une surface routière, et une ceinture (14) située radialement à l'intérieur de la bande de roulement (4), dans lequel

la bande de roulement (4) inclut une couche de chape (38), une couche intermédiaire (40) ayant une tangente de perte (LTm) à 30 °C inférieure à une tangente de perte (LTc) à 30 °C de la couche de chape (38), et une couche de base (42) ayant une tangente de perte (LTb) à 30 °C inférieure à la tangente de perte (LTm) à 30 °C de la couche intermédiaire (40), la tangente de perte étant mesurée à l'aide un spectromètre de viscoélasticité selon les standards de la norme industrielle japonaise JIS K6394 dans les conditions de mesurage suivantes : contrainte initiale = 10 %, distorsion dynamique = $\pm$ 1 %, fréquence = 10 Hz, mode = « mode d'étirement »,
la couche de chape (38) est située radialement à l'extérieur de la couche intermédiaire (40),
la couche de base (42) est située radialement à l'intérieur de la couche intermédiaire (40),
chaque extrémité (38e) de la couche de chape (38) est située axialement à l'intérieur d'une extrémité (40e) de la couche intermédiaire (40),
chaque extrémité (42e) de la couche de base (42) est située axialement à l'intérieur de l'extrémité (40e) de la couche intermédiaire (40),
la ceinture (14) inclut une couche intérieure (34) et une couche extérieure (36) située radialement à l'extérieur de la couche intérieure (34),
chaque extrémité (36e) de la couche extérieure (36) est située axialement à l'intérieur d'une extrémité (34e) de la couche intérieure (34),
une pluralité de rainures principales circonférentielles(52) sont formées sur la bande de roulement (4) de manière à s'étendre en continu dans une direction circonférentielle, et au moins trois portions en relief (54) sont formées dans la bande de roulement (4) de manière à être alignées dans une direction axiale,
lesdites au moins trois portions en relief (54) incluent une portion en relief d'épaulement (54s) qui est une portion en relief (54) située sur chaque côté le plus à l'extérieur dans la direction axiale,
la pluralité de rainures principales circonférentielles (52) incluent une rainure principale circonférentielle d'épaulement (52s) qui est une rainure principale circonférentielle (52) la plus proche de la portion en relief d'épaulement (54s),
une rainure étroite circonférentielle (50) est formée sur la portion en relief d'épaulement (54s) de manière à s'étendre en continu dans la direction circonférentielle,
une largeur de rainure de la rainure étroite circonférentielle (50) est plus petite qu'une largeur de rainure de la rainure principale circonférentielle d'épaulement (52s),
la rainure étroite circonférentielle (50) est située entre la rainure principale circonférentielle d'épaulement (52s) et l'extrémité (36e) de la couche extérieure (36) dans la direction axiale, et
la rainure étroite circonférentielle (50) est effilée depuis une ouverture de rainure (50M) vers un fond de rainure (50T),
dans lequel un rapport (GX/WT) d'une largeur de rainure (GX) au niveau de l'ouverture de rainure (50M) de la rainure étroite circonférentielle (50) sur une largeur (WT) de la bande de roulement (4) n'est pas inférieur à 2,5 % et n'est pas supérieur à 3,5 %.

2. Pneumatique (2) selon la revendication 1, dans lequel une largeur de rainure (w) des rainures principales circonférentielles (52) n'est pas inférieure à 5 % et n'est pas supérieure à 15 % de la largeur (WT) de la bande de roulement (4).

**3.** Pneumatique (2) selon la revendication 1 ou 2, dans lequel une différence ((GX-GH)/WT) entre le rapport (GX/WT) de la largeur de rainure (GX) au niveau de l'ouverture de rainure (50M) de la rainure étroite circonférentielle (50) sur la largeur (WT) de la bande de roulement (4) et un rapport (GH/WT) d'une largeur de rainure (GH) au niveau d'une position de moitié d'une profondeur de rainure (α) de la rainure étroite circonférentielle (50) sur la largeur (WT) de la bande de roulement (4) n'est pas inférieure à 0,5 % et n'est pas supérieure à 1,5 %.

**4.** Pneumatique (2) selon l'une quelconque des revendications 1 à 3, dans lequel un rapport (α/β) de la profondeur de rainure (α) de la rainure étroite circonférentielle (50) sur une épaisseur (β) de la bande de roulement (4) n'est pas inférieur à 60 % et n'est pas supérieur à 95 %.

**5.** Pneumatique (2) selon l'une quelconque des revendications 1 à 4, dans lequel un rapport (DX/DY) d'une distance (DX) dans la direction axiale depuis la rainure principale circonférentielle d'épaulement (52s) jusqu'à la rainure étroite circonférentielle (50) sur une distance (DY) dans la direction axiale depuis la rainure principale circonférentielle d'épaulement (52s) jusqu'à l'extrémité (36e) de la couche extérieure (36) n'est pas inférieur à 15 % et n'est pas supérieur à 55 %.

**6.** Pneumatique (2) selon l'une quelconque des revendications 1 à 5, dans lequel un rapport (α/d) d'une profondeur de rainure (α) de la rainure étroite circonférentielle (50) sur la profondeur de rainure (d) de la rainure principale circonférentielle d'épaulement (52s) n'est pas supérieur à 0,85 et n'est pas inférieur à 0,65.

# Fig.1

**Fig.2**

(A)

(B)

(C)

**Fig.3**

# Fig.4

**Fig.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021120242 A
- EP 3508353 A1
- EP 4019279 A1